# EUROPEAN PATENT SPECIFICATION

(11) **EP 3 948 914 B1**
(45) Date of publication and mention of the grant of the patent: **06.12.2023**
(21) Application number: 20779249.0
(22) Date of filing: 16.03.2020
(51) Int. Cl.: H01H 47/02, B60R 25/021

(54) **AUTO DIAGNOSTIC SECURITY ALARM SYSTEM**
SELBSTDIAGNOSE-SICHERHEITSWARNSYSTEM
SYSTÈME D'ALARME DE SÉCURITÉ DE DIAGNOSTIC AUTOMATIQUE

(30) Priority: 24.03.2019 IN 201941011378
(43) Date of publication of application: 09.02.2022
(73) Proprietor: TVS Motor Company Limited, Chennai 600006 (IN)
(72) Inventor: GANESAN, Ramya, Chennai 600 006 (IN); KUMAR, Amardeep, Chennai 600 006 (IN)
(74) Representative: Patentanwaltskanzlei Matschnig & Forsthuber OG
(86) International application number: PCT/IN2020/050238
(87) International publication number: WO 2020/194328

(56) References cited:
- EP-A2- 1 712 437
- CN-U- 203 111 111
- CN-U- 203 111 111
- US-A- 3 902 075
- US-A- 4 301 441
- US-A- 4 945 872
- US-A1- 2003 080 859
- US-A1- 2003 080 859

## Description

### TECHNICAL FIELD

The present subject matter generally relates to a saddle-type vehicle. More particularly but not exclusively the present subject matter relates to an auto diagnostic security alarm system for said saddle-type vehicle.

### BACKGROUND

In order to steal a vehicle, conveniently, ingenious ideas and tactics has made illegal operator to easily get access without the use of original ignition key of the vehicle or methods like towing away. Illegal means to conduct the vehicle theft successfully like hot wiring or intentionally separating and then re-joining selected vehicle wires to start the vehicle and then allowing the ignition system to run without the use of key of an ignition switch has become a favourite method.

Several types of electronic and mechanical ignition key anti-theft products are available in the market. Both as an after-manufacturing market purchase products (as add on) and as a product incorporated during the manufacturing by the manufacturer. Devices like anti-theft sirens, alarms, flashing light based on wireless communication, temporary disabling the vehicle. All of these dependent on the conscious effort made by an illegal operator to enable these types of anti-theft system. Such types of systems are often termed as active device for anti-theft purpose.

US2003080859A1 discloses an antitheft device for vehicles.

### BRIEF DESCRIPTION OF THE DRAWINGS

Figure 1 illustrates a side view of the exemplary straddle type vehicle, in accordance with an embodiment of the present subject matter.
Figure 2 illustrates a front perspective view of the straddle type vehicle with the present subject matter.
Figure 3 illustrates an ignition lock with provided with the present subject matter.

### DETAILED DESCRIPTION

In straddle type vehicle, generally, ignition lock is used to lock or unlock the vehicle. In the lock condition, all the electrical loads are isolated from the battery and all the loads becomes inoperable. When the rider has to start the vehicle, an ignition key is inserted in ignition key slot provided on the top of the ignition lock.

If the vehicle is unlocked, then all the electrical loads are supplied with battery. If ignition lock is turned ON, then in order to start the vehicle crankshaft has to be rotated at certain speed which can be done through manual kick start or it can be done automatically by cranking the engine using an electromechanical device like an electric motor. In case of an alternate powertrain e.g. an electric motor, the system is typically started by suitable ignition switch with logic or a throttle input through use of an energy source like battery.

The ignition lock has generally two set of wires. One set of the wire is connected through ignition switch to other electrical loads. Ignition lock set wires are routed though front suspension assembly which is typically covered by headlamp housing & other body panels. These wires are easily accessible and if the two wires of the ignition lock are shorted then all the electrical loads will be energized and any person can start the ignition in this way which is undesirable.

Hence, the present subject matter provides a theft proof security system which eliminates unauthorized access of the vehicle when the vehicle is in locked condition. The present subject matter disables the ignition system of the vehicle whenever an unauthorized access is attempted.

Another embodiment of the present subject matter provides an ignition lock module and wire harnessing module. The ignition lock module and the wiring harnessing module are electrically connected using a pair of connectors.

Still another embodiment of the present subject matter provides a relay control unit connected to a relay unit. The relay control unit controls the function of the relay unit when any unauthorized person tries to electrically isolate the ignition lock module from the wire harnessing module by disconnecting the pair of pole connectors.

Also, during service of the vehicle or assembly of the vehicle parts during production in a factory if any of the wire of the ignition lock module left open or disconnected then the present subject may help in indicating the fault.

Another embodiment of the present subject matter provides a relay control unit and the relay unit , together, connected in parallel with the input lines of the circuit emerging from the positive terminal of the battery such that the relay control unit activates the relay unit when the ignition lock switch is in OFF condition that is when the ignition system of the vehicle is OFF and also when the pair of connectors are disconnected to isolate the ignition lock module and wire harnessing module.

Still another embodiment of the present subject matter provides relay unit comprising a relay coil and a plurality of normally open contacts and normally closed contacts. The relay coil provides in the relay unit energizes and deenergizes the contacts in order to control the closing and opening of the switches. The relay unit controls the TCI (transistor control ignition) unit.

Another embodiment of the present subject matter provides electrical loads such as a horn and a turn signal lamp unit which can be used as an alarm and an indicating system, respectively, when any unauthorized access is attempted. This allows the existing loads to be utilized in more than one purpose without incorporating any extra unit for an alarm and indicating system thereby reducing any extra cost for extra load.

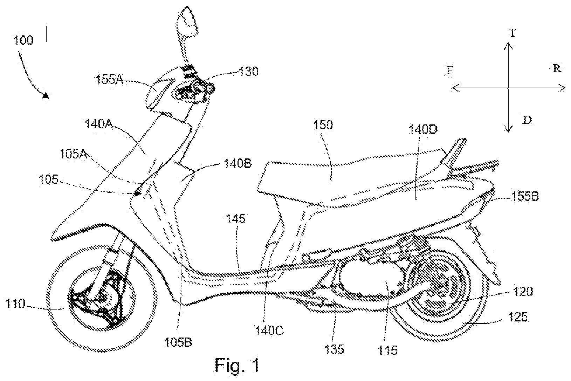

**Fig. 1** illustrates a left side view of an exemplary motor vehicle (100), in accordance with an embodiment of the present subject matter. The vehicle (100) illustrated, has a frame member (105). In the present embodiment, the frame member (105) is step-through type including a head tube (105A), and a main frame (105B) that extend rearwardly downward from an anterior portion of the head tube (105A). The main frame (105B) extends inclinedly rearward to a rear portion of the vehicle (100).

The vehicle (100) includes one or more prime movers that are connected to the frame member (105). In the present implementation, one of the prime movers is an internal combustion (IC) engine (115) mounted to the frame member (105). In the depicted embodiment, the IC engine (115) is mounted to a structural member (135) that is pivoted to the frame member (105). In one embodiment, the structural member (135) is a rigid member made including metal. The vehicle (100) also includes another prime mover, which is an electric motor (120). In a preferred embodiment, the electric motor (120) is hub mounted to one wheel of the vehicle (100). In another embodiment, one or more than one electric motor is mounted to wheels or to the frame of the vehicle. In the depicted embodiment, the vehicle (100) includes at least two-wheels and the electric motor (120) is hub mounted to the rear wheel (125) of the vehicle. A front wheel (110) is rotatably supported by the frame member (105) and is connected to a handle bar assembly (130) that enables maneuvering of the vehicle (100).

Further, the vehicle (100) includes a high capacity on-board battery (not shown) that drives the electric motor (120). The high capacity battery may include one or more high capacity battery packs or one or more low capacity cells. The high capacity battery can be disposed at a front portion, a rear portion, or at the center of the vehicle (100). The high capacity battery is supported by the frame member (105) and the vehicle (100) includes plurality of body panels, mounted to the frame member (105) for covering various components of the vehicle (100). The plurality of panels includes a front panel (140A), a leg shield (140B), an under-seat cover (140C), and a left and a right-side panel (140D). A glove box may be mounted to a leg shield (140B).

A floorboard (145) is provided at the step-through portion defined by the main tube (105B). A seat assembly (150) is disposed rearward to the step-through portion and is mounted to the main frame (105B). The seat assembly (150) that is elongated in a longitudinal direction F-R of the vehicle (100) enables the user to operate the vehicle in a saddle ride-type posture. One or more suspension(s) connect the wheels (110), (125) to the vehicle (100) and provide a comfortable ride. The vehicle (100) comprises of plurality of electrical and electronic components including a head lamp assembly (155A), a taillight (155B), a starter motor (not shown), a horn etc. Also, the vehicle (100) includes a master control unit (not shown) that takes control of the overall operation of the vehicle (100) including the function of the IC engine (115), the electric motor (120), charging of the batteries from a magneto/integrated starter generator (ISG), driving of loads by the magneto/ISG, charging of the high capacity batteries by the electric motor operating in generator mode, and any other operations associated with the operation of the vehicle (100). The vehicle (100) shown in fig. 1 is an exemplary vehicle and the present subject matter can be used in a two-wheeled vehicle, three-wheeled vehicle or a four- wheeled vehicle.

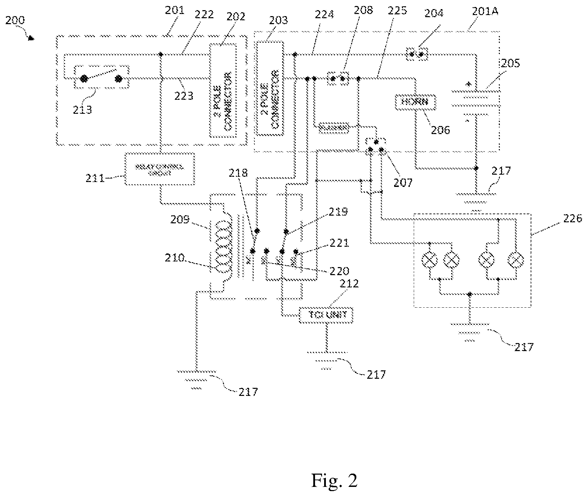

**Fig. 2** illustrates the circuit layout of the present subject matter. The circuit comprises of two modules, an ignition lock module (201) and a wiring harness module (201A). The ignition lock module (201) and the wiring harness module (201A) are electrically connected with a pair of connector (202,203) in order to transfer the power to all the loads from a power source (205) such as a battery. Input ignition wire (222) draws current from the positive terminal of the battery (205) though positive terminal wire (224) after the pair of connectors (202,203) are electrically connected. The pair of connectors (202,203) are two pole connectors. A fuse (204) is connected to the battery (205) through positive terminal wire (224) in order to protect the circuit and electronic devices from any surge in the voltage which may damage the circuit and electronic devices provided in the vehicle. The negative terminal of the battery (205) is connected to the zero potential ground terminal (217). An output ignition wire (223) is connected to a contact provided in an ignition lock switch (213). When the ignition lock of the vehicle is switched ON then the contacts of the ignition lock switch (213) gets closed which results in closing of the circuit to allow flow of current from the battery (205) through output ignition wire (223). When the pair of connectors (202,203) are connected then the power supply from the battery (205) reaches to secondary loads of the vehicle such as horn (206), flasher, turn signal lamp (226) etc.

A horn switch wire (225) connects the horn (206) with a horn switch (208) in order to control the operation of the horn (206). One of the terminal of the horn (206) is connected to the horn switch (208) and the other terminal of the horn (206) is connected to the ground (207). Horn (206) draws power from the battery (205) when the horn switch (208) is closed by the user. The input ignition wire (222) also connects a relay unit (209) in shunt with the ignition lock switch (213). The relay unit (209) comprises a relay coil (210) and one or more types of relay switches. The relay switches are either a normally closed switches (218,219) or a normally open type switches (220,221). One of the terminal of the relay coil (210) is grounded to the ground terminal (217) and another terminal of the relay coil (210) is electrically connected to a relay control unit (211). The relay control unit (211) is responsible for controlling the opening and closing of the relay switches by energizing and de-energizing the relay coil (210). An ignition circuit (212), for example, a transistor control ignition (TCI) unit (212) is connected with one of the terminal of the normally closed switch (218) and another terminal of the normally closed switch (218) is connected to the positive terminal wire (224).

When the ignition lock switch (213) gets closed after the ignition key is switched ON then the power is supplied to the vehicle load such as a horn (206), turn signal lamps (226) and the ignition circuit (212) through the normally closed contacts (218,219). The pair of connectors (202,203) remains connected to allow the flow of current necessary while driving the vehicle.

When the ignition lock switch (213) is open that is vehicle is not in OFF condition and if the pair of connectors (202,203) are attempted to open in order to short the wires then the relay control unit (211) gets activated. The relay control unit (211) allows energization of the relay coil (210). The energized relay coil (210) changes the connection of the relay switches. The normally open switches (220,221) gets closes and the normally closed switches (218,219) gets open. The TCI unit (212) gets disconnected from the circuit and disables the ignition system. The first normally open switch (220) gets closed which leads to activation of the horn (206) and the second normally open switch (221) gets closed which prevents the starting of the vehicle as the TCI unit (212) gets disconnected from the power supply. The first normally open switch (220) allows bypassing the horn switch (208) and turn signal lamp switch (207) to activate the horn (206) and turn signal lamps (226).

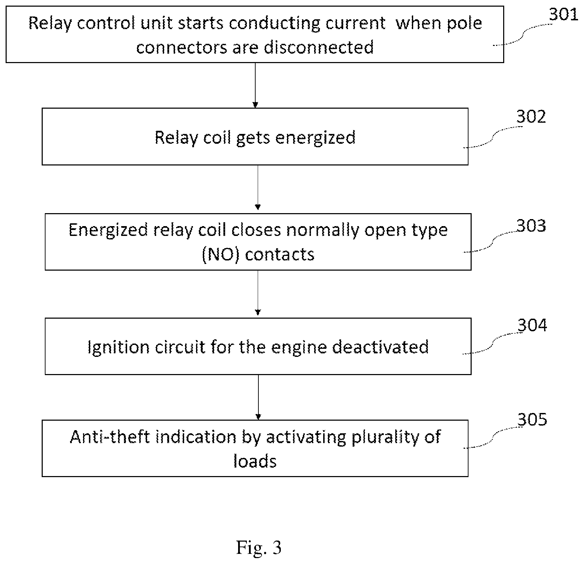

**Fig. 3** represents the process of vehicle alarm and ignition locking process when some unauthorized person tries to short the wires by first disconnecting the pair of connectors (202,203). The relay control unit which is provided in parallel with the ignition lock switch (213) starts conducting in a condition when pair of connectors (202,203) are disconnected in order to short the wires. The relay control unit remains in dormant state when the ignition lock switch (213) is in closed condition. A bi-junction transistor provided in the relay, enables the working of the relay control unit after the pair of connectors (202,203) gets disconnected. In step 301, relay control unit starts conducting. In step 302 the relay control unit starts energizing the relay coil (210). After the relay coil gets energized, the relay coil changes the position of the relay switches, the relay switches from normally closed contacts to normally open contacts in step 303. The closing of the normally open contacts causes the TCI (transistor controlled ignition) to get disconnected from the circuit in step 304 which disables the starting of the vehicle. After the normally open contacts gets closed by the energized relay coil, the closing of the normally open contacts by-passes the horn switch and the turn signal lamp switch which, as a result, activates at least one of the horn and the turn signal lamp in step 305. This system of activation of horn and turn signal lamp reduces the overall cost and installation space for any additional hardware. The devices which are already present in the vehicle have been used as an auto-triggered vehicle theft alarm and indication system by using the vehicle horn and turn signal lamps respectively. As per an embodiment, the theft intimation at step 305 can be any other form of indication e.g. a communication to the remotely located owner through a application on a portable device e.g. a mobile etc. involving at least one of an audio & visual alarm indication to the intended user / owner.

Arrows provided in the top right corner of each figure depicts direction with respect to the two-wheeled vehicle (100), wherein an arrow **F** denotes front direction, an arrow **R** indicated Rear direction, **T** denotes top and **D** denotes down direction as and where applicable. Improvements and modifications may be incorporated herein without deviating from the scope of the invention

Many modifications and variations of the present subject matter are possible in the light of above disclosure. Therefore, within the scope of claims of the present subject matter, the present disclosure may be practiced other than as specifically described.

## Claims

1. An auto diagnostic security alarm system (200) comprising:
ignition lock module (201) electrically configured to a wiring harness module (201A) through a detachable pair of connectors (202,203), said ignition lock module (201) comprises an ignition lock switch (213) and said wiring harness module (201A) comprises a plurality of loads (206,218) powered by a power source (205); and
a relay control unit (211) along with a relay unit (209) configured in shunt to said ignition lock module (201) and said wiring harness module (201A), said relay unit (209) comprises a relay coil (210) and a plurality of contacts (218.219.220.221);
wherein said relay coil (210) is capable of deactivating at least one ignition circuit (212) by controlling said plurality of contacts (218.219.220.221) when said pair of connectors (202, 203) are detached.

2. The auto diagnostic security alarm system (200) as claimed in claim 1, wherein said relay control unit (211) and said relay unit (209) are connected to input ignition wire (222).

3. The auto diagnostic security alarm system (200) as claimed in claim 1, wherein said relay control unit (211) and said relay unit (209) are connected to positive terminal wire (224).

4. The auto diagnostic security alarm system (200) as claimed in claim 1, wherein said plurality of contacts (218,219,220,221) is a normally closed type contacts (218,219) or a normally open type contacts (220,221).

5. The auto diagnostic security alarm system (200) as claimed in claim 4, wherein said normally open type contacts (220,221) gets closed and said normally closed type contacts (218,219) gets open when said relay coil (210) gets energized.

6. The auto diagnostic security alarm system (200) as claimed in claim 1, wherein said relay control unit (211) energizes said relay unit (209) comprising said relay coil (210).

7. The auto diagnostic security alarm system (200) as claimed in claim 1, wherein said plurality of loads (206,218) are activated after closing said normally open type switches (220,221).

8. The auto diagnostic security alarm system (200) as claimed in claim 7, wherein said plurality of loads (206,218) are a horn (206) and a turn signal lamp (226).

9. The auto diagnostic security alarm system (200) as claimed in claim 1, wherein said a TCI unit (212) is connected to said relay unit (209).

10. A method of operating an auto diagnostic security alarm system (200) for a saddle type vehicle comprising the steps of:
conducting current by a relay control unit (211);
energizing a relay coil (210);
switching to a normally open type contacts (220,221);
deactivating an ignition circuit (212); and
activating a plurality of loads (206,218) for theft- indication.

11. The method of operating an auto diagnostic security alarm system for a saddle type vehicle as claimed in claim 10, wherein said relay control unit (211) starts conducting current when a pair of connectors (202,203) gets detached.

## Patentansprüche

1. Autodiagnose-Sicherheitsalarmsystem (200), umfassend:
ein Zündschlossmodul (201), das über ein lösbares Paar von Verbindern (202, 203) elektrisch mit einem Kabelbaummodul (201A) verbunden ist, wobei das Zündschlossmodul (201) einen Zündschlossschalter (213) umfasst und das Kabelbaummodul (201A) eine Vielzahl von Lasten (206, 218) umfasst, die von einer Stromquelle (205) versorgt werden; und
eine Relaissteuereinheit (211) zusammen mit einer Relaiseinheit (209), die im Nebenschluss zu dem Zündschlossmodul (201) und dem Kabelbaummodul (201A) konfiguriert ist, wobei die Relaiseinheit (209) eine Relaisspule (210) und eine Mehrzahl von Kontakten (218, 219, 220, 221) umfasst;
wobei die Relaisspule (210) in der Lage ist, mindestens einen Zündkreis (212) zu deaktivieren, indem sie die Vielzahl von Kontakten (218.219.220.221) steuert, wenn das Paar von Verbindern (202, 203) gelöst ist.

2. Autodiagnose-Sicherheitsalarmsystem (200) nach Anspruch 1, wobei die Relaissteuereinheit (211) und die Relaiseinheit (209) mit einer Eingangszündleitung (222) verbunden sind.

3. Autodiagnose-Sicherheitsalarmsystem (200) nach Anspruch 1, wobei die Relaissteuereinheit (211) und die Relaiseinheit (209) mit einem positiven Anschlussdraht (224) verbunden sind.

4. Autodiagnose-Sicherheitsalarmsystem (200) nach Anspruch 1, wobei die Mehrzahl von Kontakten (218, 219, 220, 221) Kontakte des normalerweise geschlossenen Typs (218, 219) oder Kontakte des normalerweise offenen Typs (220, 221) sind.

5. Autodiagnose-Sicherheitsalarmsystem (200) nach Anspruch 4, wobei die Kontakte (220, 221) vom normalerweise offenen Typ geschlossen werden und die Kontakte (218, 219) vom normalerweise geschlossenen Typ geöffnet werden, wenn die Relaisspule (210) erregt wird.

6. Autodiagnose-Sicherheitsalarmsystem (200) nach Anspruch 1, wobei die Relaissteuereinheit (211) die Relaiseinheit (209) mit der Relaisspule (210) erregt.

7. Autodiagnose-Sicherheitsalarmsystem (200) nach Anspruch 1, wobei die mehreren Lasten (206, 218) nach dem Schließen der normalerweise offenen Schalter (220, 221) aktiviert werden.

8. Autodiagnose-Sicherheitsalarmsystem (200) nach Anspruch 7, wobei die mehreren Verbraucher (206, 218) eine Hupe (206) und eine Blinkerlampe (226) sind.

9. Autodiagnose-Sicherheitsalarmsystem (200) nach Anspruch 1, wobei die TCI-Einheit (212) mit der Relaiseinheit (209) verbunden ist.

10. Verfahren zum Betreiben eines Autodiagnose-Sicherheitsalarmsystems (200) für ein Fahrzeug des Satteltyps, das die folgenden Schritte umfasst:
Leiten von Strom durch eine Relaissteuereinheit (211);
Erregung einer Relaisspule (210);
Umschalten auf einen normalerweise offenen Kontakt (220, 221);
Deaktivieren einer Zündschaltung (212); und
Aktivieren einer Vielzahl von Lasten (206, 218) zur Diebstahlanzeige.

11. Verfahren zum Betreiben eines Autodiagnose-Sicherheitsalarmsystems für ein sattelförmiges Fahrzeug nach Anspruch 10, wobei die Relaissteuereinheit (211) beginnt, Strom zu leiten, wenn ein Paar von Verbindern (202, 203) gelöst wird.

## Revendications

1. Système d'alarme de sécurité de diagnostic automobile (200) comprenant :
un module de serrure d'allumage (201) configuré électriquement à un module de faisceau de câbles (201A) par l'intermédiaire d'une paire de connecteurs détachables (202,203), ledit module de serrure d'allumage (201) comprend un commutateur de serrure d'allumage (213) et ledit module de faisceau de câbles (201A) comprend une pluralité de charges (206,218) alimentées par une source d'énergie (205) ; et
une unité de commande de relais (211) avec une unité de relais (209) configurée en dérivation avec ledit module de serrure d'allumage (201) et ledit module de faisceau de câbles (201A), ladite unité de relais (209) comprend une bobine de relais (210) et une pluralité de contacts (218.219.220.221) ;
dans laquelle ladite bobine de relais (210) est capable de désactiver au moins un circuit d'allumage (212) en contrôlant ladite pluralité de contacts (218.219.220.221) lorsque ladite paire de connecteurs (202, 203) est détachée.

2. Système d'alarme de sécurité à diagnostic automatique (200) selon la revendication 1, dans lequel ladite unité de commande de relais (211) et ladite unité de relais (209) sont connectées au fil d'allumage d'entrée (222).

3. Système d'alarme de sécurité à diagnostic automatique (200) selon la revendication 1, dans lequel ladite unité de commande de relais (211) et ladite unité de relais (209) sont connectées au fil de borne positive (224).

4. Système d'alarme de sécurité à diagnostic automatique (200) selon la revendication 1, dans lequel ladite pluralité de contacts (218,219,220,221) est un contact de type normalement fermé (218,219) ou un contact de type normalement ouvert (220,221).

5. Système d'alarme de sécurité à diagnostic automatique (200) selon la revendication 4, dans lequel lesdits contacts de type normalement ouvert (220,221) se ferment et lesdits contacts de type normalement fermé (218,219) s'ouvrent lorsque ladite bobine de relais (210) est alimentée.

6. Système d'alarme de sécurité à diagnostic automatique (200) selon la revendication 1, dans lequel l'unité de commande de relais (211) alimente l'unité de relais (209) comprenant la bobine de relais (210).

7. Système d'alarme de sécurité à diagnostic automatique (200) selon la revendication 1, dans lequel ladite pluralité de charges (206, 218) est activée après la fermeture desdits interrupteurs de type normalement ouvert (220, 221).

8. Système d'alarme de sécurité et de diagnostic automobile (200) selon la revendication 7, dans lequel la pluralité de charges (206, 218) est un klaxon (206) et un témoin de clignotant (226).

9. Système d'alarme de sécurité à diagnostic automatique (200) selon la revendication 1, dans lequel l'unité TCI (212) est connectée à l'unité de relais (209).

10. Méthode de fonctionnement d'un système d'alarme de sécurité à diagnostic automatique (200) pour un véhicule de type selle, comprenant les étapes suivantes :
conduire le courant par une unité de commande de relais (211) ;
alimentation d'une bobine de relais (210) ;
commutation sur des contacts de type normalement ouvert (220,221) ;
désactiver un circuit d'allumage (212) ; et
activer une pluralité de charges (206,218) pour l'indication de vol.

11. Méthode de fonctionnement d'un système d'alarme de sécurité à diagnostic automatique pour un véhicule de type selle selon la revendication 10, dans laquelle ladite unité de commande de relais (211) commence à conduire le courant lorsqu'une paire de connecteurs (202,203) se détache.
